# EUROPEAN PATENT APPLICATION

(11) **EP 1 380 945 A2**
(43) Date of publication of application: **14.01.2004**
(21) Application number: 03254412.4
(22) Date of filing: 11.07.2003
(51) Int. Cl.: G06F 9/44

(54) **Method and system for flexible time-based control of application appearance and behaviour**

(30) Priority: 12.07.2002 US 395655 P
(71) Applicant: Ensequence, Inc., Portland, OR 97204 (US)
(72) Inventor: Wallace, Michael W., Vancouver, WA 98683 (US); Westermann, Larry A., Portland, OR 97210 (US)
(74) Representative: Roberts, Mark Peter

(57) **Abstract**

A method, a computer readable medium, and a data system are provided for controlling computer system operation during execution of the computer system. At least one attribute change of a computer system to occur during the execution of the computer system is identified. The attribute change is associated with an event during computer system execution such that indication of the event triggers the attribute change. An index point is identified at which point the attribute change is to occur, and an index point type is specified for determining whether the attribute change is triggered depending on when the execution of the computer system commenced relative to occurrence of the index point.

## Description

This patent application is related to concurrently-filed patent applications entitled "METHOD AND SYSTEM FOR AUTOMATIC CONTROL OF GRAPHICAL COMPUTER APPLICATION APPEARANCE AND EXECUTION," bearing attorney docket number N.89068, "METHOD AND SYSTEM FOR PROVIDING FLEXIBLE TIME-BASED CONTROL OF APPLICATION APPEARANCE AND BEHAVIOR," bearing attorney docket number N.89071, and "METHOD AND SYSTEM FOR GENERATING FLEXIBLE TIME-BASED CONTROL OF APPLICATION APPEARANCE AND BEHAVIOR," bearing attorney docket number N.89072, all of which are incorporated by reference.

This invention relates generally to computer systems and software applications therefor and, more specifically, to timing, control, and execution of software applications.

Many computer applications are time sensitive. Some computer applications merely signify that time is passing by changing the appearance of a graphical display. For example, a program copying a file from a source folder to a destination folder may show symbols that look like pages of text passing from the first folder to the second folder. Similarly, Internet browsers change the appearance of a status bar, or rotate or otherwise change the appearance of a symbol on the screen to show the computer's acknowledgment that time is passing even if the browser is slow to respond with the desired page. Slightly more complicated examples include games in which players have a limited period of time to complete some activity or in which the players' scores are based on how long it takes them to perform some task.

As price-performance of computer hardware continues to improve, computers have proliferated to televisions and set-top boxes (STBs) which receive digital cable television or satellite signals and decode those signals from a digital data stream and convert the data into audio-visual programs. The STBs, therefore, make interactive television possible. With an appropriately configured STB, a user potentially can play along with a game show, take courses by distance learning, bid in on-line auctions, and otherwise engage the television medium actively. The STB thus allows the user to engage in a highly time-dependent computer program where results depend on the user reacting in a limited time period.

In these examples and other forms of interactive multimedia, the timing of user interaction is correlated with a broadcast or replay of a program. Again taking the example of a quiz show, the user may have to respond to a question within a limited time period. It is important that the user be able to see the question, wager points, choose an answer, and know when the time to answer expires. Even in the cases of non-interactive programs, it may be desirable to display information about the events transpiring on-screen. It may be important to be able to display this information at relevant points in the program, such as when a character appears, when a scene changes, when an advertisement is being shown or is about to be shown, and at other times.

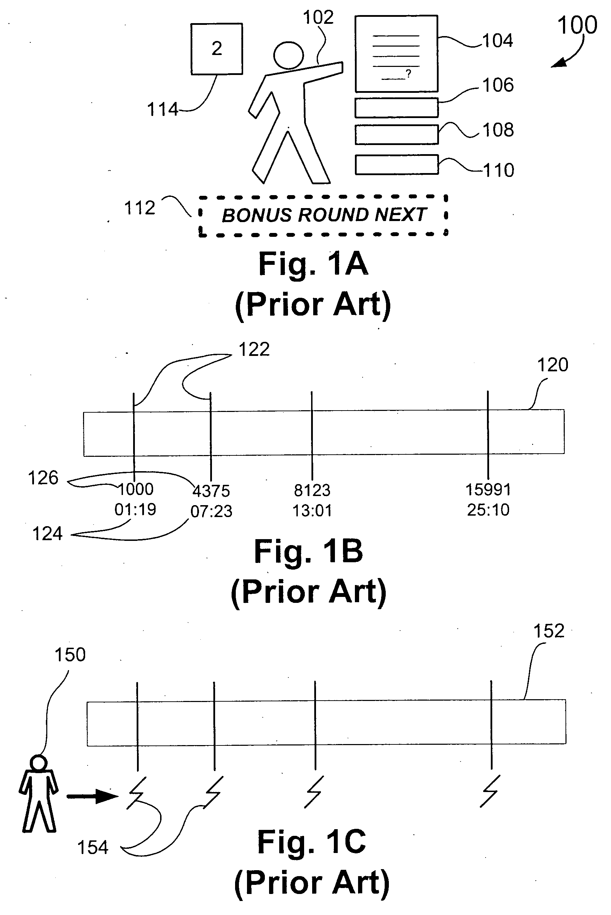

To create programming carrying this time-dependent additional content, a developer first identifies time points at which informational and interactive content will be shown. Then, the developer faces the challenge of translating a list of identified time points into programmatic elements that initiate the additional content to be seen by the user. Taking the example of an interactive game show with which users can play along as depicted in FIGURE 1A, the developer faces a number of specific tasks. In creating the application, an object may be to create a display 100 showing a number of graphical items. The developer may be working from an audiovisual recording, the image content of which includes only a host 102. Upon this background, the developer is tasked with creating the rest of the visual content shown in FIGURE 1A. For example, the developer may be tasked with displaying a current question 104 and a range of multiple choice answers 106, 108, and 110 from which a user can choose, perhaps from a keyboard, a remote control, or a similar input device. The developer also want do visually communicate to the user that some questions are worth double points with a banner message 112. In addition, the developer may also provide a status window 114 that tells users what round or question is in progress so that users can track where they are in the course of the game.

Creating such content generally is a familiar task to a video editor. The video editor may begin with multiple recordings of live action from multiple camera angles, recorded or filmed without interruption. From these recordings, the video editor may select specific segments to make up the program, edit out unnecessary recorded footage, choose camera angles, and add titles, graphics, and other content like that shown in FIGURE 1A. Historically, this has been done with video editing equipment and text generating equipment. Text generating equipment creates rasterized text as though it were visually recorded by a camera, then superimposes the text over the originally recorded video and rerecords the composite video. This process is familiar to television creators and viewers, but does not include means for creating user interaction.

Improved technology has provided video designers with improved video production tools. Video production designers already are familiar with non-linear editing tools that allow designers to examine video footage, underlying scripts, audio tracks, and other content associated with the video. Using these non-linear editing tools, designers can select specific time points in a video at which titles, annotations, overdubbing, or other content might be added. If production designers could associate the additional content with time points in the data representing the original program, playback devices such as STBs could decode and append this additional content to present it to users.

Conventionally, two basic methods are used for triggering the presentation of additional content within a program. In a first method, synchronization points can be stored within the application data content to asynchronously initiate the additional content. For example, Society for Motion Picture and Television Engineers (SMPTE) time codes or frame numbers, counted from a selected reference point, can be used to trigger additional content as shown in FIGURE 1B. An application or program 120 is embedded with a number of trigger points 122. An application (not shown) executing the program 120 then monitors the video time codes 124 or frame numbers 126 and, using conventional conditional logic, determines when a trigger point 122 has been reached. The application (not shown) can then execute specific program logic to generate the change in appearance or behavior associated with the trigger points 122. This method is self-contained in that the encoded synchronization points can initiate display of the additional content. However, this method does suffer a disadvantage in that is consumes a significant amount of programming logic and a corresponding amount of program memory within the STB to operate. It also will be appreciated that, if there is a miscommunication in transmission of the reference point, none of the synchronization points will execute at the appropriate time.

Referring now to FIGURE 1C, in a second method, a control operator 150 at a broadcast site from which a program 152 is being transmitted can transmit control signals 154 to initiate the additional content. The control operator 150 might engage a semi-automatic computer application (not shown) to monitor the program 152 and view previously conceived timelines. Using such a system, the control operator 150 in real time could actuate a control device to insert trigger signals 154 into the broadcast stream at the appropriate times. The application executing the program 152 receives these trigger signals 154, interprets the instructions encoded therewith, and then effects the desired change in behavior or appearance of the program related to the additional content. The code needed to initiate the additional content may have been previously stored in the program memory, or may be transmitted along with the trigger signals 154. This second approach has the potential advantage of using less computer memory storage than does the first method, but requires human intervention during the broadcast and real-time bandwidth capable of supporting this remote control of the content.

Referring back to FIGURE 1A, in the context of the game show example, either method would allow for questions 104, answers 106, 108, and 110, and other information 112 and 114, to be selectively displayed. The first method entails time-monitoring of the program and the previously-described application and hardware burdens. The second method involves an operator, supporting software at transmission and reception sites, and additional bandwidth. Both involve the potential expense of a software engineer to create the complex combinations of programming statements required to facilitate accurate triggering of the additional content.

Thus, there is an unmet need in the art for generating synchronization or trigger points during the execution of an interactive application and for invoking additional content associated with these trigger points as a result.

Embodiments of the present invention enable providing program content or changing program behavior during execution of a computer system. Changes in appearance or behavior and attributes of a computer system to take place during computer system execution are identified. The attribute changes are associated with events, and these events are identified as index points. The index points implicate characteristics with which the attribute changes are implemented, such as whether the attribute change associated with the index point will be triggerable if computer system execution commenced after the event associated with the index point has passed. The index points allow a program developer flexible control over whether users will be experience attribute changes depending upon when the users engage the program by commencing execution of the computer system. Different types of index points can be assigned to different attribute changes so that different attribute changes can have different properties. Moreover, the index points can be revised and stored separately from the attribute changes, allowing for flexibility and efficiency in revising programs and in transmitting the revisions.

More specifically, embodiments of the present invention provide a method, a computer readable medium, and a data system for controlling computer system operation during execution of the computer system. Using embodiments of the present invention, at least one attribute change of a computer system to occur during execution of the computer system is identified. The attribute change is associated with an event during computer system execution such that indication of the event triggers the attribute change. An index point is identified at which point the attribute change is to occur, and an index point type is specified for determining whether the attribute change is triggerable depending on when the execution of the computer system commenced relative to occurrence of the index point.

In accordance with further aspects of the invention, the attribute change is triggered upon reaching the event, and the attribute change is made in accordance with characteristics of the attribute change determined by the index point specified. Also, the index points are collected into an index list file, and the index points collected thereby are associated with the state changes that the index points initiate. Further, a plurality of index point types can be specified to allow for program developer control of the content associated with the index points. An index point type suitably may be a first index point type for which the associated attribute change will be initiated only if computer system execution commenced before the event associated with the index point is reached. Also, an index point type suitably may be a second index point type for which the attribute state change is initiated upon reaching the index point, and will continue until the attribute change is countermanded. In addition, an index point type suitably may be a third index point type having a start point and a stop point for which the associated attribute change is initiated upon reaching the index point if computer system execution commenced before the event associated with the stop point is reached.

The preferred and alternative embodiments of the present invention are described in detail below, by way of example, with reference to the following drawings, in which:-
FIGURE 1A is a screen display from a hypothetical prior art interactive software application;
FIGURE 1B is a timeline of event triggers for the hypothetical prior art interactive software application of FIGURE 1A;
FIGURE 1C is another timeline of event triggers for the hypothetical prior art interactive software application of FIGURE 1A;
FIGURE 2A is a timeline showing operational characteristics of a first index point type;
FIGURE 2B is a timeline showing operational characteristics of a second index point type;
FIGURE 2C is a timeline showing operational characteristics of a third index point type having associated stop points;
FIGURE 3A is an index table collecting events associated with the index points;
FIGURE 3B is an index table collecting events associated with the third type of index points listing the times of start points and stop points associated with the index point;
FIGURE 3C is an index table collecting the index point types; a start point and a stop point for each index point providing for possible use of the third index point type, and a state change initiated by the index point;
FIGURE 4 is a graphical depiction of a data stream showing a table of attribute changes and an associated index table being loaded to control behavior of an interactive application
FIGURES 5A-5F are screens from an interactive computer application controlled using an embodiment of the present invention;
FIGURE 6A is an index table triggering state changes of the interactive computer application shown in FIGURES 5A-5F;
FIGURE 6B is a state table driven by the index table of FIGURE 6A and controlling the run-time operation of the interactive computer application displayed to the user in FIGURES 5A-5F;
FIGURE 7 is a flowchart of a routine for creating an index points for controlling attribute changes according to an embodiment of the present invention;
FIGURE 8 is a flowchart of a routine for executing a computer application responsive to an index table for controlling attribute changes according to an embodiment of the present invention; and
FIGURE 9 is a block diagram of a data processing/media control system of an embodiment of the present invention.

By way of overview, embodiments of the present invention provide a method, a computer readable medium, and a data system for controlling computer system operation during execution of the computer system. Using embodiments of the present invention, at least one attribute change of a computer system to occur during execution of the computer system is identified. The attribute change is associated with an event during computer system execution such that indication of the event triggers the attribute change. An index point is identified at which point the attribute change is to occur, and an index point type is specified for determining whether the attribute change is triggered depending on when the execution of the computer system commenced relative to occurrence of the index point.

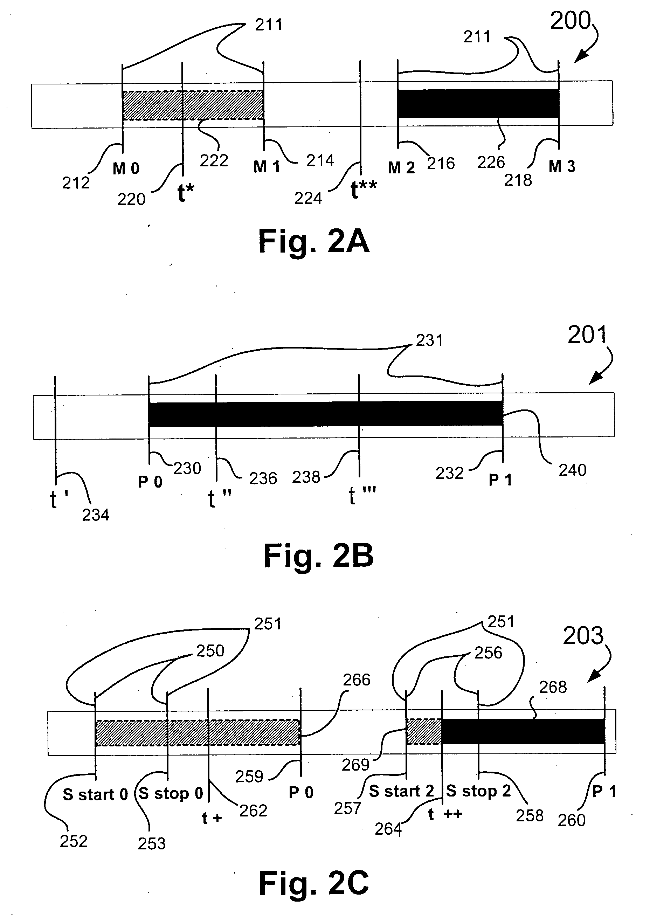

FIGURES 2A-3C show timelines 200, 201, and 203, respectively, depicting at least three types of index points that can be used in accordance with embodiments of the present invention. FIGURE 2A shows a plurality of a first index point type 211 which for purposes of this detailed description are termed momentary index points. A momentary index point 211 is momentary in a sense that an attribute change associated with the index point is triggered only if computer system execution commenced before the event associated with the momentary index point 211 was reached. Taking the example of an interactive game show, program designers may wish to display a time-limited question if the user engaged the program before the question was first presented. This may be to prevent a user from being confused or distracted by an object effectively flickering across the screen because the user engaged the program after the question was asked but without the user having time to respond.

More specifically, FIGURE 2A shows four momentary index points at M0 212, M1 214, M2 216, and M3 218. In this example M0 212 and M3 216 trigger the display of information, while M1 214 and M3 218 turn off the display of the information. Relative to the index point M0 212, the user initiates computer system execution at t* 220, which is at a point after M0 212. A cross-hatched region 222 represents a duration from M0 212 to M1 214 during which the information is programmed to be displayed. However, because the user initiated computer system execution at t* 220, that is after M0 212 which initiated display of the information, the information will not be displayed. On the other hand, if the user continues with computer system execution after t* 220 or, for the sake of further example, initiates computer system execution at t** 224, then the information initiated by M2 216 (as indicated by the solid region 226) will be displayed. By continuing with computer system execution after t* 220 or commencing computer system execution at t** 224, computer system execution will have commenced before M2 216. The momentary index point 216 provides for the information to be displayed as long as computer system execution commences before the event associated with a momentary index point is reached.

It will be appreciated that index points M1 214 and M3 218 are used to turn off the display of information by triggering a countermanding attribute removing the information from the display. If computer system execution commenced at t** 224 and there were no index point such as M3 218 to turn off the display of the information, the information would remain displayed. In the case of computer system execution commencing at t* 220, the index point M1 214 does not turn off the information because the information was never turned on, but the index point M1 214 suitably is included for users engaging computer system execution prior to M0 212. It will be appreciated that index points M1 214 and M3 218 could be other types of index points, such as a progressive index point which will be described in connection with FIGURE 2B. It will be further appreciated that a duration could be associated with the index points M0 212 and M1 214, thereby making a second index point to deactivate the attribute superfluous.

FIGURE 2B shows two index points 230 and 232 of a second index point type which for purposes of this detailed description is termed a progressive index point 231. Like the momentary index point (FIGURE 2A), the progressive index point 231 initiates an associated attribute change with an event associated with the progressive index point 231. On the other hand, unlike the momentary index point (FIGURE 2A), the progressive index point 231 causes the associated attribute change to be initiated regardless of when computer system execution commences relative to the occurrence of the event associated with the progressive index point 231. Attribute changes associated with a progressive index point 231 suitably are deactivated by subsequent attribute changes.

The progressive index point P0 230, for purposes of this example, initiates an attribute change such as a display of information, whereas progressive index point P1 232 countermands the attribute change and removes the information from display. As shown on a timeline 201, the user may initiate computer execution at point t' 234, t" 236, or t"' 238, and in any of those cases the attribute change will be made until countermanded by the second progressive index point P1 232, as indicated by a solid region 240. It will be appreciated that a progressive index point 231 operates in the nature of conventional video editing today where superimposed content appears regardless of when a user engages the program.

FIGURE 2C shows two index points 250 and 256 of a third index point type which for purposes of this detailed description is termed a segmented index point 251. A segmented index point 251 has a start point and a stop point. Like a momentary index point (FIGURE 2A), the segmented index point 251 will only initiate an associated attribute change if computer system execution is commenced by an indicated time. Unlike the momentary index point (FIGURE 2A), however, the segmented index point 251 enables initiation of the attribute change as long as computer system execution commences between the start point and the stop point, and until countermanded by a subsequent attribute change.

More specifically, FIGURE 2C shows a segmented index point 250 as having a start point S start 0 252 and a stop point S stop 0 253. An attribute change associated with the segmented index point 250, if initiated, persists until countermanded by a subsequent attribute change. In the example of FIGURE 2C, the attribute change initiated by segmented index point 250 is shown to be countermanded by an attribute change triggered by a progressive index point P0 259. It will be appreciated that another type of index point suitably serves to countermand a previous attribute change, or a durational parameter could be associated with the segmented index point to deactivate an associated attribute change. As shown in FIGURE 2C, a user commences computer system execution at t+ 262, which is after the stop point S stop 0 253. Because computer system execution commenced after the stop point S stop 0 253, the attribute change will not be initiated. The non-triggered attribute change is indicated by the cross-hatched region 266 which would have represented a duration of the attribute change.

By contrast, segmented index point 256 has a start point S start 2 257 and a stop point S stop 2 258 for an attribute change which subsequently is countermanded by index point P1 260. As shown, the user engages computer system execution at t++ 264, which precedes stop point S stop 2 258. As a result, the attribute change is made, as shown by a solid region 268. It will be appreciated that a cross-hatched region 269 shows a portion of a duration of the attribute change for which the attribute change was not initiated. For sake of comparison, it will be appreciated that a segmented index point 251 operates comparably to a momentary index point (FIGURE 2A) which has a "grace period." Thus, the segmented index point 251 allows an attribute change to be initiated even if computer system execution commences after a start point 252 or 257 as long as computer system execution is commenced before an end of either "grace period" ending with a stop point 253 or 258.

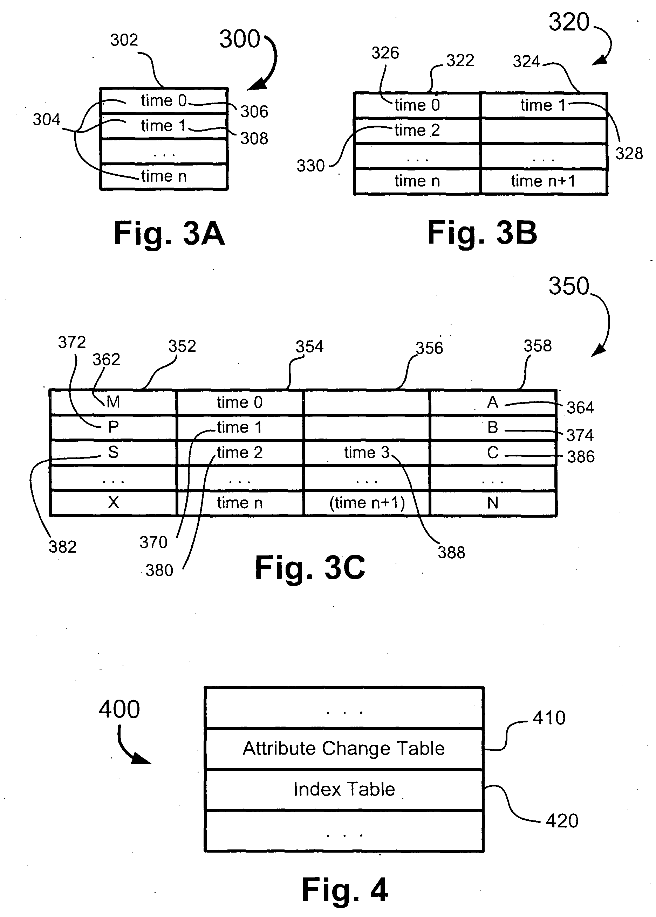

For a program having a number of attribute changes initiated by a number of events, the index points suitably are collected in index tables. FIGURES 3A, 3B, and 3C show three different types of index tables which might be used in accordance with embodiments of the present invention. FIGURE 3A shows an index table 300 with a single column 302. The single column lists a series of events 304 that trigger a sequence of index points. A single column table, for example, suitably controls a series of attribute changes keyed by index points of a single type such as momentary index points (FIGURE 2A). If each event in a program is keyed to a momentary index point, an index table that lists events which trigger those index points suitably provides enough information to initiate attribute changes upon reaching the listed events. Associated attribute changes will be initiated if computer system execution commenced before the event associated with the index point was reached. The index table 300 also is suitable for initiating a series of progressive index points (FIGURE 2B) which will initiate attribute changes associated therewith which will persist until countermanded. Further, the index table 300 is suitable for initiating a series of segmented index points (FIGURE 2C) where the events are listed in pairs for start points and stop points. For example, time 0 306 suitably may be a start point for initiating an attribute change and time 1 308 suitably may be a stop point marking an end of a period during which the attribute change may be initiated. Thus, depending on a configuration of a system using the index points, an index table 300 with a single column 302 suitably triggers associated attribute changes.

Alternatively, FIGURE 3B shows a more complex index table 320 having two columns 322 and 324. For example, the index table 320 is suitable for a system using one or more segmented index points (FIGURE 2C) in addition to other types of index points such as momentary index points (FIGURE 2A) and progressive index points (FIGURE 2B). For sake of example, it is assumed that an attribute change associated with a first event uses a segmented index point with a start point time 0 326 and a stop point time 0 328. The first column 322 can store start points and the second column 324 can store stop points. On the other hand, if a second attribute change is initiated by a momentary index point, only a start point is needed. Thus, specifying time 2 330 as a stop point for an attribute change is sufficient to trigger the attribute change if computer system execution commenced prior to time 2 330 and, suitably, no event is logged in the second column 324 because stop points are not used by momentary index points.

It will be appreciated that a single-column table like the index table 300 (FIGURE 3A) could also be used for initiating attribute changes triggered by segmented index points. If accommodation is made in the single-column table to accept a second operand in the single column which can specify a stop point for a segmented index point, the index table could control operation of segmented index points as well.

FIGURE 3C shows a still more detailed index table 350. As described in the foregoing examples of FIGURE 3A and 3B, it is assumed that a program using the index table stores in the index table index point types to determine whether attribute change initiation is dependent on computer system execution commencing before the events are reached. It also is assumed that a program using the index points in FIGURES 3A and 3B is programmed to sequentially apply index points to attribute changes, and the index points in the index table are not associated to particular attribute changes in the index table. However, these types of information suitably are included in an index table. The index table 350 has four columns including an index point type column 352, an event column for start points 354, an event column for stop points for segmented index points 356, and an attribute change column 358. Accordingly, it is manifest in the index table 350 that, for example, at time 0 360, a momentary index point (M) 362 triggers attribute change A 364 if computer system execution commenced before time 0 360 and until attribute change A 364 is countermanded. Similarly, at time 1 370, a progressive index point P 372 triggers attribute change B 374 until attribute change B is countermanded. Also, at time 2 380, a segmented index change S 382 triggers an attribute change C 386 provided computer system execution commences before stop point time 3 388 and until attribute change C 386 is countermanded. In sum, a multiplicity of index point information can be manifested in an index table for controlling a series of attribute changes within the broad concepts of the present invention.

FIGURE 4 shows a data stream 400 including a series of attribute changes stored in an attribute change table 410 and index points stored in an index table 420 in accordance with an embodiment of the present invention. A suitably enabled receiver can use these tables 410 and 420 to direct execution of a program, with or without receiving additional application-specific code, according to the data in the tables 410 and 420. Such a suitably enabled receiver of the tables 410 and 420 using a method, program, or system to direct an application is described in the concurrently-filed, co-pending patent application entitled "METHOD AND SYSTEM FOR PROVIDING FLEXIBLE TIME-BASED CONTROL OF APPLICATION APPEARANCE AND BEHAVIOR," bearing attorney docket number N.89071, the contents of which are hereby incorporated by reference. The attribute change table 410 and the index table 420 can be separately modified and/or communicated as desired to the computer system executing the program to provide for flexibility in creating and modifying programs, as well as for saving bandwidth when only one or the other is to be communicated.

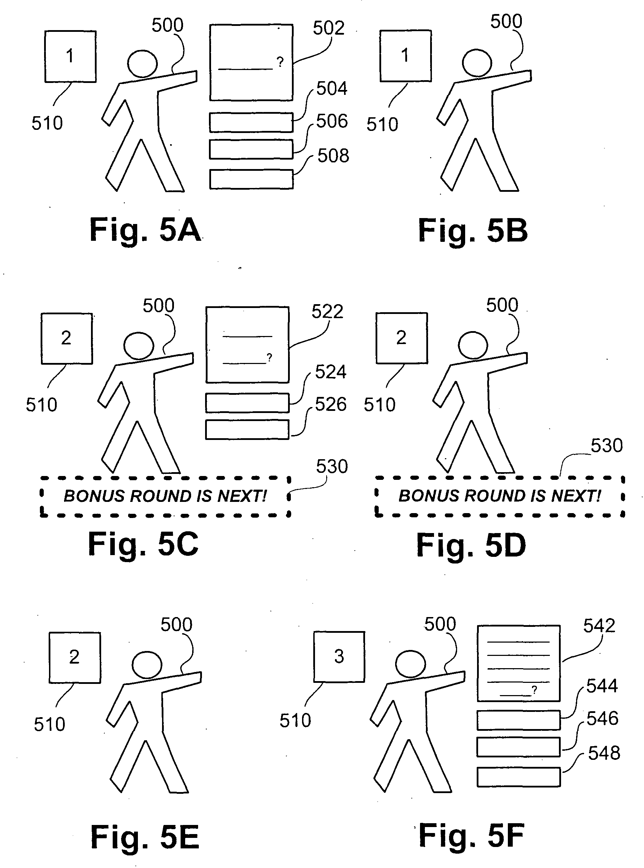

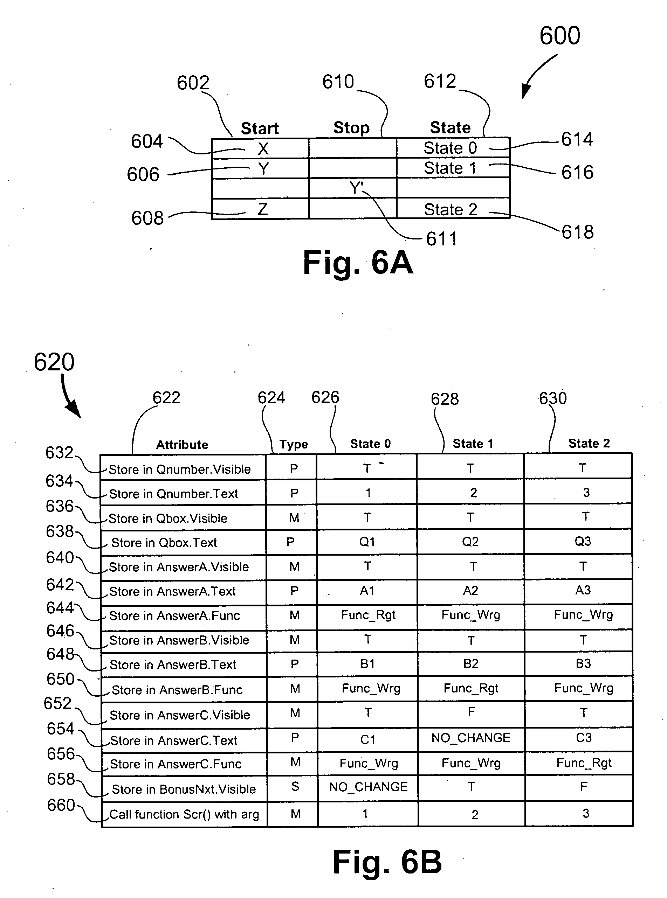

For clarity, an extended non-limiting example of operation of such a index table-driven system is provided in FIGURES 5A-5F. FIGURES 5A-5F show displays from a hypothetical interactive television program, such as a game show. During presentation of the game show, attributes presented to a user are changed according to an index file list 600 (FIGURE 6A) and a state table 620 (FIGURE 6B) as a function of when the user engages the program, as will be further explained. The representative displays shown in FIGURES 5A-5F represent a series of consecutive images that a program designer wants a user to see depending on the point at which the user engages the program.

FIGURE 5A shows a display seen by a user when computer system execution commences before suitable index points associated with an event X is reached. The index points invokes a collection of attribute changes shown. More specifically, in FIGURE 5A, a host 500 appears on-screen. It will be appreciated that the images of the host 500 suitably may represent the only actual camera footage incorporated by the program, whereas other attributes suitably can be computer-generated under control of the index file list 600 (FIGURE 6A) and the state table 620 (FIGURE 6B). Among the attributes displayed in FIGURE 5A are a first question 502, three possible answers 504, 506, and 508, and a status indicator 510 that, in this case, informs a user that this is the first question. FIGURE 5B shows a display seen by a user when computer system execution commences after the event X has passed. In FIGURE 5B, only the image of the host 500 and the status indicator 510 remain.

To achieve the result shown in FIGURES 5A and 5B, attributes 502, 504, 506, and 508 suitably are associated with event X by a momentary index point, as will be further explained in connection with FIGURE 6B. The status indicator 510 is shown regardless of the fact that computer system execution began after event X. Thus, the status indicator 510 suitably is associated with event X by a progressive trigger. The program designer may choose not to display the question 502 and answers 504, 506, and 508 on the screen unless the user commenced computer system execution in time to engage the program before the question was shown. However, the program designer may want to inform the user of the progress of the game, and thus uses a progressive index point for the status indicator 510 to inform the user of the question number even if the user has missed the question.

FIGURE 5C shows a display seen by a user who has engaged the program before suitable index points associated with an event Y is reached. Among the attributes displayed in FIGURE 5C are a second question 522, two possible answers 524 and 526, along with the status indicator 510 that, in this case, informs a user that this is now the second question. Also, a banner 530 is added to inform a user that the "BONUS ROUND IS NEXT!" FIGURE 5D shows a display seen by a user when computer system execution commenced after the event Y has passed but before a segmented index point stop point is reached, as will be further described. In FIGURE 5D, the attributes added in FIGURE 5C are gone except for the status indicator 510 and the banner 530. FIGURE 5E shows a display seen by a user when computer system execution commenced after the index point invoking the attribute changes in FIGURE 5C and the stop point for the segmented index point stop point is reached. In FIGURE 5E, the only attribute remaining is the status indicator 510.

To achieve the result shown in FIGURES 5C, 5D, and 5E, attributes 522, 524, and 526 suitably are associated with event Y by a momentary index point as will be further explained in connection with FIGURE 6B. Also, there are only two available answers to this question, control of which also will be further explained in connection with FIGURE 6B. The status indicator 510 is shown regardless of the fact that computer system execution began after event Y, although at event Y an index point caused a value of the status indicator 510 to change from "1" to "2." Therefore, the status indicator 510 suitably is associated with event Y by a progressive trigger which changes the value displayed. Again, the program designer may choose not to display the question 522 and answers 524 and 526 on the screen unless the user commenced computer system execution to engage the program before the question was shown. Again, the program designer suitably wants to keep the user informed of the progress of the game, and thus uses a progressive index point for the status indicator 510 to inform the user of the question number. Finally, the banner 530 continues to be displayed for a time after the event Y triggering the display of attributes 522, 524, and 526 has passed. The program designer may wish to inform a loyal viewer that the "BONUS ROUND IS NEXT!" so that, even if the user has missed the chance to answer question 2, he or she may wish to remain for the promised bonus round. Nonetheless, the program designer wishes to unclutter the screen at a time before the next question is displayed, thus, the program designer suitably chooses a segmented index point to associate the banner 530 with the event Y.

Finally, FIGURE 5F shows a display seen by a user who has engaged the program before suitable index points associated with an event Z is reached. Presentation of these attributes can be controlled by the program designer as in the foregoing examples, or the program designer may exercise prerogatives involving different index point choices.

FIGURES 6A and 6B show an index table 600 and an attribute change table 620 which can be used to direct presentation of the program to the user. As previously mentioned, with a receiver at a user location using a suitable method, computer readable medium, or system, only the index table 600 and attribute change table 620 are needed to provide and control the attribute changes described in connection with FIGURES 5A-5F. Advantageously, the attribute change and control information can be sent to the receiver without having to create application specific code or consume the bandwidth or memory to transmit and store application specific code, respectively. For example, a typical set-top box (STB) which suitably is used to execute a program has little memory to spare on storing application specific code. Moreover, the bandwidth of digital transmission media is fairly crowded with video and audio data, and there is little bandwidth left for transmitting large bodies of application specific code. Methods, computer readable media, and systems for creating and executing a program using embodiments of the present invention are described in concurrently-filed patent applications entitled "METHOD AND SYSTEM FOR AUTOMATIC CONTROL OF GRAPHICAL COMPUTER APPLICATION APPEARANCE AND EXECUTION," bearing attorney docket number N.89068, "METHOD AND SYSTEM FOR PROVIDING FLEXIBLE TIME-BASED CONTROL OF APPLICATION APPEARANCE AND BEHAVIOR," bearing attorney docket number N.89071, and "METHOD AND SYSTEM FOR GENERATING FLEXIBLE TIME-BASED CONTROL OF APPLICATION APPEARANCE AND BEHAVIOR," bearing attorney docket number N.89072, all of which are incorporated by reference.

Attribute changes keyed to common events, such as the display of questions and answers and other processes to be herein described, can be associated with each other into state changes, and the series of state changes collected into a state table. Methods, computer readable media, and systems for creation and use of state table are described in the application entitled "METHOD AND SYSTEM FOR AUTOMATIC CONTROL OF GRAPHICAL COMPUTER APPLICATION APPEARANCE AND EXECUTION," bearing attorney docket number N.89068, incorporated by reference. For the sake of brevity in the following example, attribute changes keyed to common events will be collected into states as marked in FIGURES 6A and 6B.

FIGURE 6A shows an exemplary index table 600 configured to direct attribute changes as dictated by the attribute change table 620 (FIGURE 6B). The index table 600 has three columns. A first column is an event column 602 listing events X 604, Y 606, and Z 608 triggering attribute changes. It will be appreciated that, instead of using chronological time, the events also could be measured in frame numbers or another counting mechanism that marks the passage of the program with which the index points in the index table 600 are associated. A second column is stop point column 610 used for storing stop points associated with segmented index points (FIGURE 2C). One stop point at event Y' 611 is stored. The operation of stop point 611 will be described in connection with the attribute change table 620 (FIGURE 6B), below. A third column is a state column 612 which lists State 0 614, State 1 616, and State 2 618. Each of these states 614, 616, and 618 represents a collection of attribute changes corresponding to a common event such as event X 604, event Y 606, and event Z 608, respectively. In other words, when event X 604 is reached, an index point keys the transition to State 0 614. Similarly, reaching event Y 606 keys the transition to State 1 616, and reaching event Z 608 keys the transition to State 618. As will be appreciated, there is one index point and one state for each of the three questions presented in FIGURES 5A-5F.

FIGURE 6B shows the attribute change table 620 in which the attribute changes are collected into states associated with index points in the index table 600 (FIGURE 6A). The combination of the index table 600 and the attribute change table 620 determines when and if attributes are viewed by a user of the program as shown in FIGURES 5A-5F. In an attribute change column 622, attribute changes are listed which will determine the appearance of the attributes 632-660 presented to a user. An index point column 624 lists index point types for each of the attribute changes listed in the attribute column 622. As previously described, the index point types can be stored in the index point table 600 (FIGURE 6A), they can be set or assumed by an application receiving the tables 600 and 620, they can be specified in an attribute change table 620 as shown, or they can be set in other ways known to a person of ordinary skill in the art.

In columns for State 0 626, State 1 628, and State 2 630, operands modify the attribute changes 632-660 listed in the attribute change column 632. For the sake of a non-limiting example, the attribute changes 632-660 are keyed to one of the types of index points previously described in connection with FIGURES 2A-2C. The following discussion cross-references the contents of FIGURE 6B with the index table 600 of FIGURE 6A and the display screens shown in FIGURES 5A-5F. In the following discussion, for the sake of visual clarity, entries are referenced by a column 622-630 and an attribute change 632-660, the latter making up the rows of the attribute change table 620.

In the attribute change table 620, the first attribute changes listed are for the status indicator 510 (FIGURES 5A-5F), "Store in Qnumber.Visible" 632 and "Store in Qnumber.Text" 634. The status indicator 510 remains visible regardless of whether the user engaged the program before an index point triggering a question was initiated (FIGURES 5A, 5C, and 5E) or after an index point triggering a question was initiated (FIGURES 5B, 5D, and 5F). The programming element "Store in Qnumber.Visible" 632 that determines the attribute change for the status indicator suitably is a progressive index point (FIGURE 3B) as signified by the operand "P" in the index point column type 624. As previously described, a progressive index point initiates an attribute change that will persist until the attribute change is countermanded by a subsequent attribute change. For the programming element "Store in Qnumber.Visible" 632, the argument "T" for "True" is entered in the State 0 column 626, in the State 1 column 628, and the State 2 column 630. Accordingly, the status indicator 510 (FIGURES 5A-5F) is made visible at event X 604 (FIGURE 6A) keying a progressive index point for the attribute change 632 which remains visible throughout the events in this example.

The status indicator 510 remains visible, but the data it conveys does change. The operand for attribute change "Store in Qnumber.Text" 634 changes from "1" in the State 0 column 626 to "2" in the State 1 column 628 to "3" in the State 2 column 630. The operand for "Store in Qbox.Visible" 636 is set to "T" for "True" in the State 0 column 626, the State 1 column 628, and the State 2 column 630, indicating that the question number remains visible at all times as shown in FIGURES 5A-5F. Again, a progressive index point "P" is specified in the index point type column 624 for the attribute change "Store in Qnumber.Text" 634 because, as shown in FIGURES 5A-5F, the number of a current question is desired to remain visible at all times, regardless of whether computer system execution commences before or after the index point is reached.

New questions 502, 522, and 542 are presented in FIGURES 5A, 5C, and 5F, respectively, but are removed. from display in FIGURES 5B, 5D, and 5E where computer system execution commenced after the event associated with the index point passed as previously described. Display of the question is controlled by the attribute change "Store in Qbox.Visible" 636, and its presentation is controlled by a momentary index point "M" in the index point type column 624. Upon reaching event X 604 (FIGURE 6A) the index point associated with State 0 614 is triggered. A "T" in the State 0 column 626 results in the question being displayed if computer system execution commences before event X 604 (FIGURE 6A) is reached initiating the attribute change.

The text of the questions changes from State 0 614 to State 1 616 to State 2 618 as shown in the attribute change table where the attribute change "Store in Qbox.Text" 638 takes invokes the text for "Q1," "Q2," and "Q3," in the State 0 column 626, the State 1 column 628, and the State 2 column 630, respectively. The index point type P is used to designate a progressive index point (FIGURE 2B) to indicate that the question text can be stored in the question box without change regardless of when computer system execution commences relative to events listed in the index table 600 (FIGURE 6A). Whether the question text persists whether computer execution begins after the triggering event is reached is irrelevant. As previously described, the question's visibility is controlled by the attribute change "Store in Qbox.Visible" 636 which is governed by a momentary index point, thereby achieving the program designer's desired appearances regardless of the index point type assigned to the attribute change "Store in Qbox.Text" 638.

The presentation of the answers for the questions works in the same way as for the questions. Attribute changes "Store in AnswerA.Visible" 640, "Store in AnswerB.Visible" 646, and "Store in AnswerC.Visible" 652 control the visibility of each of the answer choices. Attribute changes "Store in AnswerA.Text" 642, "Store in AnswerB.Text" 648, and "Store in AnswerC.Text" 654 control the content of the answer blocks displayed. Like the attribute change pairs for the questions, a momentary index point type "M" is selected in the index point type column 624 for the attribute changes "Store in AnswerA.Visible" 640, "Store in AnswerB.Visible" 646, and "Store in AnswerC.Visible" 652 so that the questions will not be presented if a user commences program execution after the triggering event is reached. Also like the attribute change pairs for the questions, a progressive index point type "P" is selected in the index point type column 624 for the attribute changes "Store in AnswerA.Text" 642, "Store in AnswerB.Text" 648, and "Store in AnswerC.Text" 644 because content index point type is irrelevant when the visibility of the question is controlled as previously described. Again, these attributes provide data which result in the appearance of displays as elected by the program designer in FIGURES 5A-5F.

There are two differences to note about attribute changes relative to the answer choices. First, as shown in FIGURE 5C, there are only two answer choices for the second question. As a result, in the State 1 column, the argument for "Store in AnswerC.Visible" 652 is changed to "F" for "False." Thus, even if computer system execution commences before reaching the event initiating the attribute change 652, no answer choice will be shown for "C." Further, because the answer choice will not be shown, for the attribute change "Store in AnswerC.Text" 654, the argument is "NO_CHANGE" because there is no point in changing the content if the answer choice will not be displayed. For the third question as pictured in FIGURE 5F, there is a third answer choice 548. Therefore, for "Store in AnswerC.Visible" 652 the argument is changed back to "T" for "True" in the State 2 column 630, and the argument for "Store in AnswerC.Text" 654 is changed to "C3" to give an answer for the current question.

Second, for each of the answer choices a function is named so that the user can interact with the game. "Store in AnswerA.Func" 644, "Store in AnswerB.Func" 650, and "Store in AnswerC.Func" 656 are attribute changes representing function calls calling functions "Func_Rgt" for a right answer and "Func_Wrg" for a wrong answer. Answer choice A is the right answer for the first question, thus the argument for "Store in AnswerA.Func" 644 is "Func_Rgt" for State column 0 626, and the argument for "Store in AnswerB.Func" 650 and "Store in AnswerC.Func" 656 is "Func_Wrg." The arguments for "Store in AnswerA.Func" 644, "Store in AnswerB.Func" 650, and "Store in AnswerC.Func" 656 similarly are changed to make choice B the right answer for the second question in State column 1 628 and to make choice C the right answer for the third question in State column 2 630. It may be assumed that a user has buttons A, B, and C on a keypad or STB remote allowing him or her to choose one of the three answers. It will be appreciated that the index point type for "Store in AnswerA.Func" 644, "Store in AnswerB.Func" 650, and "Store in AnswerC.Func" 656 in the index point type column 624 is "M" for momentary. Accordingly, just as the user cannot see the answer choices if computer system execution commences after the initiating event is reached, he or she also cannot choose an answer and thereby engage the associated functions.

There is one attribute change which is controlled by a segmented index point (FIGURE 2C), the "BONUS ROUND NEXT!" banner 530 (FIGURES 5C and 5D). As previously described, the program designer desires to leave the banner 530 displayed even if a user missed the second question by commencing computer system execution after event Y 606 (FIGURE 6A) was reached, thereby initiating the attribute changes in the State 1 column 628. FIGURE 5D shows the banner 530 displayed, even though no question or answer choices are displayed. FIGURE 5E shows that at some point the program designer desires preventing the user from seeing the banner 530 if the user commences program execution some time after event Y 606 (FIGURE 6A) was reached but before the next event initiating a state change at event Z 608 (FIGURE 5F) initiates display of the third question in the State 2 column 630. Accordingly, the segmented index point (FIGURE 2C) is a suitable choice because the program designer can specify a stop point setting a time after the start point for the segmented index point (FIGURE 2C) for which the attribute change still will be initiated.

The attribute change for the banner 530 (FIGURES 5C and 5D) is "Store in BonusNxt.Visible" 658. The index point type entry in the index point type column 624 is "S" for "segmented." In the State 0 column 626, "NO_CHANGE" is argument for a default nondisplayed condition. In the State 1 column 628, the argument is changed to "T" for "True" so that the banner 530 (FIGURES 5C and 5D) will be displayed if the user commences computer system execution at or before the event Y 606 (FIGURE 6A) initiating the state change or at or before the stop point Y' 613. It will be appreciated that there is no state column for the stop point Y' 613 in the attribute change table 630. As will be appreciated by programmers ordinarily skilled in the art, it may be more efficient for an event handler to process the stop point Y' 613 when it is the only change being made, rather than initiate a mechanism to process all attribute changes for a state change collecting many attribute changes. Accordingly, an event handler will process stop points such as Y' 613, preventing the associated attribute change Store in BonusNxt.Visible" 658 from being triggered if computer system execution commenced after Y' 613.

A last entry in the attribute change table 620 is the "Call function Scr() with arg" 660. This is a scorekeeping function, the results of which are not shown. The attribute change still is responsive to an index point type specified in the index point type column 624. It can be presumed that the scorekeeping function is only active for questions the user can see and answer, as indicated by the specification of "M" for a momentary index point in the index point type column for "Call function Scr() with arg" 660. Accordingly, it will be appreciated that background program attributes not related to display of information are responsive to index points. It will also be appreciated that in such an attribute change table 620 there is flexibility for programming involving function calls capable of processing functions named as arguments or with known functions with specified arguments.

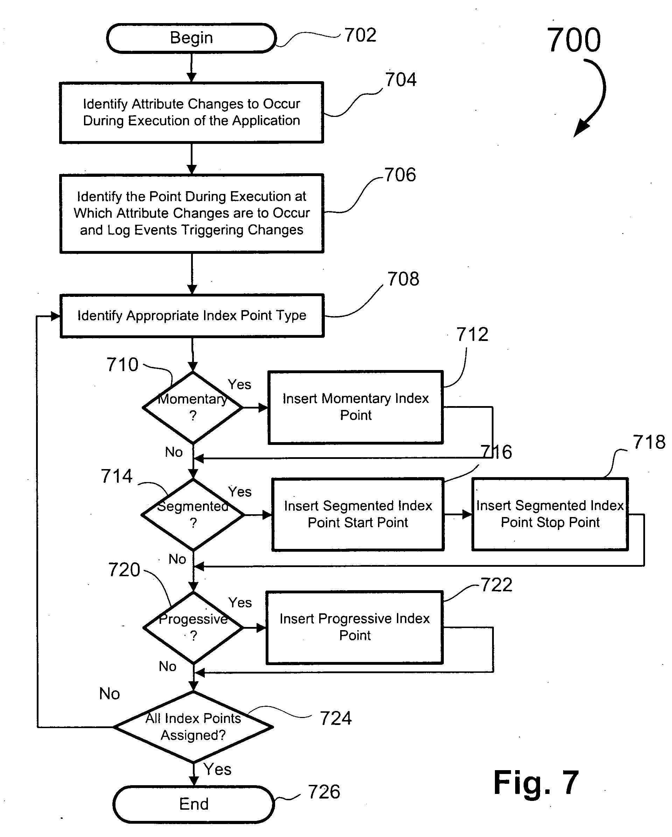

FIGURE 7 depicts a routine 700 for selecting index points. The routine begins at a block 702. At a block 704, objects affected by state changes during execution of the program are identified. At a block 706, for each object affected by state changes, one or more points during computer system execution for which the object should change are identified and logged in an index file list. At a block 708, for an identified attribute change, the appropriate index point type is identified. At a decision block 710, it is determined if the appropriate index point is a momentary index point. If so, at a block 712 the momentary index point is inserted. If not, at a decision block 714, it is determined if the appropriate index point is a segmented index point. If so, at a block 716 a start point is inserted to initiate the attribute change, and at a block 718 a stop point is inserted marking a last time computer system execution can commence and still initiate the associated attribute change. If not, at a decision block 720, it is determined if the appropriate index point is a progressive index point. If so, at a decision block 722, a starting point is inserted along with identification of a stopping point for the attribute change. At a decision block 724 it is determined if all the index points have been assigned in order to effect the changes identified at the block 704. If not, the routine continues with identification of the appropriate index point at the block 708. On the other hand, if all the index points have been assigned, the routine 700 concludes at a block 726 once all suitable index points have been inserted.

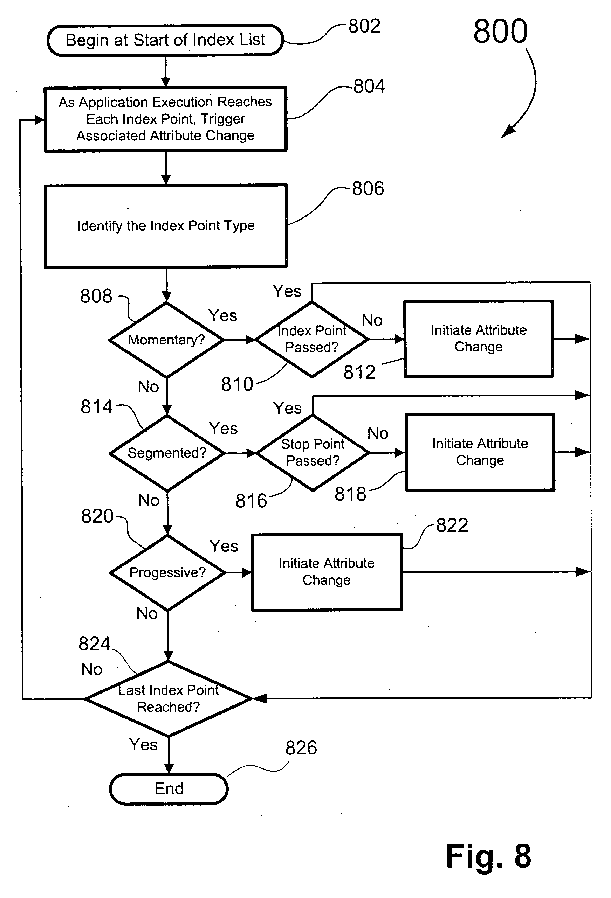

FIGURE 8 depicts a routine 800 for executing a program according to an index list. The routine begins at a block 802. At a block 804, as computer system execution reaches each listed index point, associated state and/or attribute changes are initiated. At a block 806, the type of index point triggering the attribute change is examined. At a decision block 808, it is determined if the index point is a momentary index point. If so, at a decision block 810 it is determined if the index point has passed before computer system execution commenced. If not, at a block 812, the associated attribute change is initiated. However, if the index point passed before computer system execution commenced, the index point is skipped and the routine progresses to a decision block 824 to determine if that index point was the last index point.

If at the decision block 808 the index point is determined not to be a momentary index point, at a decision block 814 it is determined if the index point is a segmented index point. If it is, at a decision block 816 it is determined if the stop point for the segmented index point passed before computer system execution commenced. If not, at a block 818 the associated attribute change is initiated. However, if the stop point did pass before computer system execution commenced, the index point is skipped and the routine progresses to the decision block 824 to determine if that index point was the last index point.

If at the decision block 814 the index point is determined not to be a segmented index point, at a decision block 820 it is determined if the index point is a progressive index point. If so, at a block 822 the associated attribute changes are initiated. However, if at the decision block 820 it is determined that the index point is not a progressive index point, the index point is skipped and the routine progresses to the decision block 824 to determine if that index point was the last index point. It will be appreciated that if three different types of index points are used and the first two types have been ruled out, that the decision block 820 can be avoided. The decision block 820 is used to indicate flexibility in that other forms of index points can be devised and used within the broad principles of the present invention.

If at the decision block 824 the index point just processed is determined not to have been the last index point, the routine 800 loops to the block 804 to identify the next index point. If the index point just processed is determined to have been the last index point, the routine ends at a block 826.

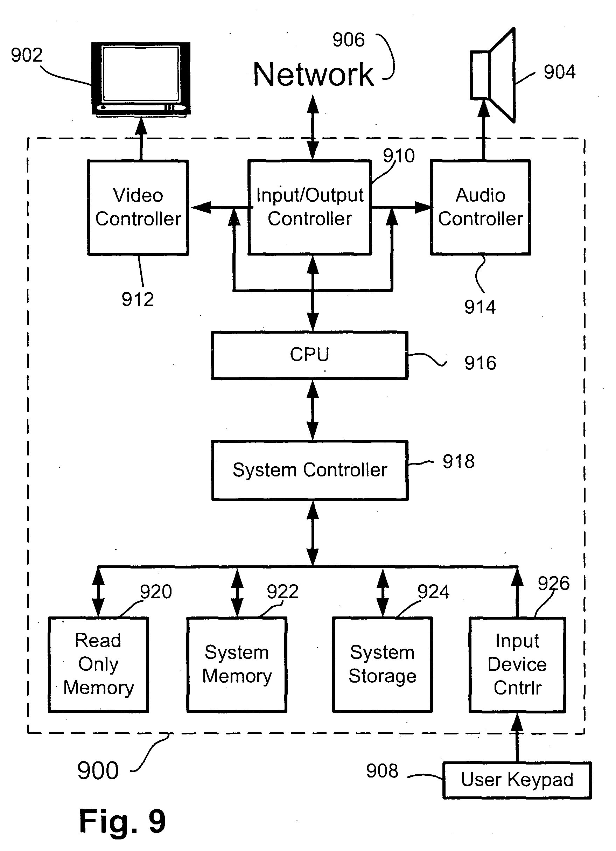

FIGURE 9 shows a computer system 900, which could be in the form of a media controller or a set-top box (STB) operable for using embodiments of the present invention. The computer system 900 is operable for controlling a display 902, such as a television, and an audio subsystem 904, such as a stereo or a loudspeaker system. The computer system 900 receives input from a network 906, such as a broadband data network. The computer system 900 also receives user input from a wired or wireless user keypad 908, which may be in the nature of a STB remote.

The computer system 900 receives input from the network 906 via an input/output controller 910, which directs signals to and from a video controller 912, an audio controller 914, and a central processing unit (CPU) 916. In the case of a STB, the input/output controller 910 suitably is a multiplexer for routing video data blocks received from the network 906 to a video controller 912 in the nature of a video decoder, audio data blocks to an audio controller 914 in the nature of an audio decoder, and for routing other data blocks to a CPU 916 for processing. In turn, the CPU 916 communicates through a system controller 918 with input and storage devices such as read only memory (ROM) 920, system memory 922, system storage 924, and input device controller 926.

The computer system 900 shown in FIGURE 9 thus can receive state tables or state table files, pass them through the input/output controller 910 to the CPU 916 where it will be processed through the system controller 918, suitably in response to user input gathered through the user keypad 908 and the input device controller 926. The state table can then be executed as previously described in connection with the foregoing examples, method flowcharts, and block diagrams.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A method for controlling computer system operation during execution of the computer system, the method comprising:
identifying an attribute change of a computer system to occur during execution of the computer system;
associating the attribute change with an event in the computer system such that indication of the event triggers the attribute change;
identifying an index point in the execution of the computer system indicative of when the event is to occur;
associating the index point in the computer system with the event; and
specifying an index point type for the index point, the index point type determining whether the attribute change is triggerable depending on when the execution of the computer system commenced relative to occurrence of the index point.

2. The method of claim 1, including triggering the event in the computer system upon reaching the index point in the computer system associated with the event, such that the attribute is changed in accordance with characteristics of the attribute change determined by the index point type specified.

3. The method of claim 1 or 2, wherein the index point type is a first index point type that specifies that the attribute change is triggerable only when the index point is reached after the execution of the computer system commenced.

4. The method of claim 1 or 2, wherein the index point type is a second index point type that specifies that the attribute change is triggerable when the index point triggering the attribute change has been reached and the attribute change associated with the index point has not been countermanded with a subsequent attribute change.

5. The method of claim 1 or 2, wherein the index point type is a third index point type that specifies that the attribute change is triggerable when the index point has been reached, the attribute change associated with the index point has not been countermanded by a subsequent attribute change, and a stop activation point associated with the index point has not been reached until after the execution of the computer system commenced.

6. The method of claim 5, wherein an index table includes a list of the index points and a corresponding list of stop activation points for the third index point type.

7. The method of claim 5, wherein an index table includes a list of the index points, a corresponding list of index point types and, a corresponding list of stop activation points for the third index point type.

8. The method of any one of the preceding claims, wherein an index table includes a list of the index points.

9. The method of any one of claims 1 to 6, wherein an index table includes a list of the index points and a corresponding list of index point types.

10. The method of any one of claims 6 to 9, wherein the index table is ordered by sequential occurrence of the index points.

11. A computer readable medium for storing instructions for controlling computer system operation during system execution, the computer readable medium comprising computer program code means for carrying out the method of any one of claims 1 to 10.

12. A system for controlling computer system operation during computer system execution, the system comprising:
a user interface configured to identify an attribute change of a computer system to occur during execution of the computer system; and
a processor including:
a first component configured to associate the attribute change with an event in the computer system such that indication of the event triggers the attribute change;
a second component configured to identify an index point in the execution of the computer system indicative of when the event is to occur;
a third component configured to associate the index point in the computer system with the event; and
a fourth component configured to specify an index point type for the index point, the index point type determining whether the attribute change is triggered depending on when the execution of the computer system commenced relative to occurrence of the index point.

13. The system of claim 12, wherein the processor includes a fifth component configured to trigger the attribute change in the computer system upon reaching the index point in the computer system associated with the event, such that the attribute is changed in accordance with characteristics of the attribute change determined by the index point type specified.

14. The system of claim 12 or 13, wherein the fourth component is further configured to specify that the index point type is a first index point type such that the attribute change is triggerable only when the index point is reached after the execution of the computer system commenced.

15. The system of claim 12 or 13, wherein the fourth component is further configured to specify that the index point type is a second index point type such that the attribute change is triggerable when the index point triggering the attribute change has been reached and the attribute change associated with the index point has not been countermanded by a subsequent attribute change.

16. The system of claim 12 or 13, wherein the fourth component is further configured to specify that the index point type is a third index point type such that the attribute change is triggerable when the index point has been reached, the attribute change associated with the index point has not been countermanded by a subsequent attribute change, and a stop activation point associated with the index point has not been reached until after the execution of the computer system commenced.

17. The system of claim 16, further comprising a seventh component configured to generate an index table including a list of the index points and a corresponding list of stop activation points for the third index point type.

18. The system of claim 16, further comprising an eighth component configured to generate an index table including a list of the index points, a corresponding list of index point types and, a corresponding list of stop activation points for the third index point type.

19. The system of any one of claims 12 to 18, further comprising a sixth component configured to generate an index table including a list of the index points.

20. The system of any one of claims 12 to 17, further comprising a seventh component configured to generate an index table including a list of the index points and a corresponding list of index point types.

21. The system of any one of claims 17 to 20, wherein the sixth, seventh or eighth component is further configured to generate the index table by sequential occurrence of the index points.

22. A method for controlling computer system operation during execution of the computer system, the method comprising:
identifying an attribute change of a computer system to occur during execution of the computer system;
associating the attribute change with an event in the computer system such that indication of the event triggers the attribute change;
identifying an index point in the execution of the computer system indicative of when the event is to occur;
associating the index point in the computer system with the event;
specifying that the attribute change is triggered only when the index point is reached after the computer system was engaged; and
capturing data representing one of attribute change information and index point information for use during the execution of the computer system.

23. A computer readable medium storing instructions for controlling computer system operation during system execution, the computer readable medium comprising:
first computer program code means for identifying an attribute change of the computer system to occur during execution of the computer system;
second computer program code means for associating the attribute change with an event in the computer system such that indication of the event triggers the attribute change;
third computer program code means for identifying an index point in the execution of the computer system indicative of when the event is to occur;
fourth computer program code means for associating the index point in the computer system with the event;
fifth computer program code means for specifying that the attribute change is triggered only when the index point is reached after the computer system was engaged; and
sixth computer program code means for capturing data representing one of attribute change information and index point information for use during the execution of the computer system.

24. A system for controlling computer system operation during computer system execution, the system comprising:
a user interface configured to identify an attribute change of a computer system to occur during execution of the computer system; and
a processor including:
a first component configured to associate the attribute change with an event in the computer system such that indication of the event triggers the attribute change;
a second component configured to identify an index point in the execution of the computer system indicative of when the event is to occur;
a third component configured to associate the index point in the computer system with the event;
a fourth component configured to specify that the attribute change is triggered only when the index point is reached after the execution of the computer system commenced; and
a fifth component configured to capture data representing one of attribute change information and index point information for use during the execution of the computer system.

25. A method for controlling computer system operation during execution of the computer system, the method comprising:
identifying an attribute change of a computer system to occur during execution of the computer system;
associating the attribute change with an event in the computer system such that indication of the event triggers the attribute change;
identifying an index point in the execution of the computer system indicative of when the event is to occur;
associating the index point in the computer system with the event;
specifying that the attribute change is triggered when the index point triggering the attribute change has been reached and the attribute change associated with the index point has not been countermanded by a subsequent attribute change; and
capturing data representing one of attribute change information and index point information for use during the execution of the computer system.

26. A computer readable medium storing instructions for controlling computer system operation during system execution, the computer readable medium comprising:
first computer program code means for identifying an attribute change of the computer system to occur during execution of the computer system;
second computer program code means for associating the attribute change with an event in the computer system such that indication of the event triggers the attribute change;
third computer program code means for identifying an index point in the execution of the computer system indicative of when the event is to occur;
fourth computer program code means for associating the index point in the computer system with the event;
fifth computer program code means for specifying that the attribute change is triggered when the index point triggering the attribute change has been reached and the attribute change associated with the index point has not been countermanded with a subsequent attribute change; and
sixth computer program code means for capturing data representing one of attribute change information and index point information for use during the execution of the computer system.

27. A system for controlling computer system operation during computer system execution, the system comprising:
a user interface configured to identify an attribute change of a computer system to occur during execution of the computer system; and
a processor including:
a first component configured to associate the attribute change with an event in the computer system such that indication of the event triggers the attribute change;
a second component configured to identify an index point in the execution of the computer system indicative of when the event is to occur;
a third component configured to associate the index point in the computer system with the event;
a fourth component configured to specify that the attribute change is triggered when the index point triggering the attribute change has been reached and the attribute change associated with the index point has not been countermanded with a subsequent attribute change; and
a fifth component configured to capture data representing one of attribute change information and index point information for use during the execution of the computer system.

28. A method for controlling computer system operation during execution of the computer system, the method comprising:
identifying an attribute change of a computer system to occur during execution of the computer system;
associating the attribute change with an event in the computer system such that indication of the event triggers the attribute change;
identifying an index point in the execution of the computer system indicative of when the event is to occur;
associating the index point in the computer system with the event;
specifying that the attribute change is triggered when the index point has been reached, the attribute change associated with the index point has not been countermanded by a subsequent attribute change and a stop activation point associated with the index point has not been reached; and
capturing data representing one of attribute change information and index point information for use during the execution of the computer system.

29. A computer readable medium storing instructions for controlling computer system operation during system execution, the computer readable medium comprising:
first computer program code means for identifying an attribute change of the computer system to occur during execution of the computer system;
second computer program code means for associating the attribute change with an event in the computer system such that indication of the event triggers the attribute change;
third computer program code means for identifying an index point in the execution of the computer system indicative of when the event is to occur;
fourth computer program code means for associating the index point in the computer system with the event;
fifth computer program code means for specifying that the attribute change is triggered when the index point has been reached, the attribute change associated with the index point has not been countermanded by a subsequent attribute change and a stop activation point associated with the index point has not been reached until after the execution of the computer system commenced; and
sixth computer program code means for capturing data representing one of attribute change information and index point information for use during the execution of the computer system.

30. A system for controlling computer system operation during computer system execution, the system comprising:
a user interface configured to identify an attribute change of a computer system to occur during execution of the computer system; and
a processor including:
a first component configured to associate the attribute change with an event in the computer system such that indication of the event triggers the attribute change;
a second component configured to identify an index point in the execution of the computer system indicative of when the event is to occur;
a third component configured to associate the index point in the computer system with the event;
a fourth component configured to specify that the attribute change is triggered when the index point has been reached, the attribute change associated with the index point has not been countermanded by a subsequent attribute change and a stop activation point associated with the index point has not been reached until after the execution of the computer system commenced; and
a fifth component configured to capture data representing one of attribute change information and index point information for use during the execution of the computer system.

31. A computer loaded with program code as defined in claim 11, 23, 26 or 29.
